# EUROPEAN PATENT APPLICATION

(11) **EP 2 309 628 A1**
(43) Date of publication of application: **13.04.2011**
(21) Application number: 09252397.6
(22) Date of filing: 09.10.2009
(51) Int. Cl.: H02M 1/44, H02M 1/42

(54) **Controller for a power conversion circuit**

(71) Applicant: NXP B.V., 5656 AG Eindhoven (NL)
(72) Inventor: Kuebrich, Johann Baptist Daniel, Redhill, Surrey RH1 1DL (GB); Schmid, Markus, Redhill, Surrey RH1 1DL (GB); Duerbaum, Thomas Antonius, Redhill, Surrey RH1 1DL (GB); Halberstadt, Hans, Redhill, Surrey RH1 1DL (GB)
(74) Representative: Hardingham, Christopher Mark

(57) **Abstract**

A power conversion controller (102) for controlling the operation of a switch (104) in a power conversion circuit (100). The switch (104) having a "time-on" property and a "clamping frequency" property, in use. The power conversion controller (102) comprises a detector (112) configured to detect one or more operational parameter values of the power conversion circuit (100), and a clamping frequency adjuster (114) configured to adjust the clamping frequency of the switch (104) in accordance with the one or more detected parameter values in order to maintain the "time-on" property of the switch (104) above a minimum threshold value.

## Description

This invention relates to a controller for a power factor correction circuit, and particularly a controller for the operation of a switch in a power factor correction circuit.

Boost-converters are commonly used as an active power factor correction (PFC) stage in power supplies. Operation in Boundary Conduction Mode (BCM) allows low-loss switching through full and/or partial zero-voltage and/or zero-current switching. However, under partial load conditions, the BCM switching frequency increases, resulting in higher losses. It is known to limit this by applying an upper frequency clamp value to limit the maximum switching frequency, such that the system switches to fixed frequency Discontinuous Conduction Mode (DCM) once the clamping frequency value is reached. However, losses that occur on a "per-switch basis" (driver losses, switching losses), remain high and become even more significant proportionately as the load is further reduced.

The listing or discussion of a prior-published document or any background in this specification should not necessarily be taken as an acknowledgement that the document or background is part of the state of the art or is common general knowledge. One or more aspects/embodiments of the present disclosure may or may not address one or more of the background issues.

According to a first aspect of the invention, there is provided a power conversion controller for controlling the operation of a switch in a power conversion circuit, wherein the switch has a "time-on" property and a "clamping frequency" property, in use, the power conversion controller comprising:
a detector configured to detect one or more operational parameter values of the power conversion circuit; and
a clamping frequency adjuster configured to adjust the clamping frequency of the switch in accordance with the one or more detected parameter values in order to maintain the "time-on" property of the switch above a minimum threshold value.

Maintaining the "time-on" property above a minimum threshold value can enable switching losses to be controlled, and this can be particularly advantageous for operation at low power levels where switching losses can significantly affect the efficiency of a circuit. Embodiments of the invention can provide more efficient power factor correction (PFC) circuit operation.

The "time-on" or "on-time" property may represent a period of time that the switch is in an on state for a switching cycle, wherein the switching cycle defines a switching frequency. As discussed in more detail below, the switching frequency may be the same as a clamping frequency, or may be less than a clamping frequency, depending upon the mode of operation.

It will be appreciated that the "time-on" property of the switch may be maintained above the minimum threshold value either directly or indirectly. For example, any control mechanism can be employed that causes the "time-on" property of the switch to be changed, including, but not limited to, adjusting the peak current through the inductor or transistor of the power conversion circuit as well as directly adjusting the "time-on" property of the switch.

The "clamping frequency" may represent a maximum switching frequency. That is, the switch may not be operated such that its switching frequency exceeds the clamping frequency.

The power conversion circuit may comprise a power factor correction circuit (PFC). The power conversion circuit may also comprise a DC to DC converter provided after the PFC. The DC to DC converter may be an isolated switched mode power supply (SMPS) such as a flyback converter. The PFC and DC to DC converter may be provided as a combinational controller, which may be a single integrated circuit (IC).

The on-time of the switching operation may be controlled in order to provide a required inductor current value and therefore a required output current through a load, wherein both currents are averaged over a half cycle, that is 180° of a rectified oscillating input signal.

In some embodiments, the minimum threshold value for the "time-on" property of the switch represents a value at which operation of the power conversion circuit is considered inefficient. This may take into account the fact that relatively low "time-on" values represent low output power values and therefore switching losses can have a more significant effect on efficiency at such low output power values.

The controller may be configured to operate the switch, for example by turning the switch on, when the voltage across the switch is low, for example at, or near to, a minimum value (which may be known as a valley). The skilled person will appreciate that the voltage across the switch does not directly jump from the output voltage to the input voltage level after the output diode stops conducting as there is an oscillation in the voltage across the switch due to the presence of parasitic capacitors, transistors and other components. Therefore, the controller may be configured to turn on the switch at a point in time when the oscillating voltage is at, or near to, a minimum value/valley, and this may be referred to as valley switching or valley skipping.

Furthermore, the minimum threshold value may be selected in order to satisfy an energy efficiency incentive program such as the "80 Plus Program".

Use of the clamping frequency may be considered as fixed clamping frequency operation as the clamping frequency value is fixed at a constant value as long as the "time-on" property satisfies certain requirements including one or more threshold values. This may cause the power factor correction circuit to operate in discontinuous mode whereby an inductor is completely discharged during a period between successive switching operations.

The clamping frequency adjuster may be configured to adjust the clamping frequency in a stepwise fashion, which may be considered as discrete adjustment as opposed to continuous adjustment. In other embodiments, the clamping frequency adjuster may be configured to adjust the clamping frequency continuously.

The clamping frequency adjuster may be configured to decrease the clamping frequency for the switch if the "time-on" reaches, or would otherwise be less than, the minimum threshold value. This may cause the "time-on" property to be increased whilst maintaining a constant value for the ratio of the time-on property to the clamping period, and therefore not unduly affect the average output of the power conversion circuit.

It will be appreciated, that for embodiments where the clamping frequency is continually adjusted/adjustable, the time-on property of the switch is also continuously adjusted/adjustable.

The clamping frequency adjuster may be configured to adjust the clamping frequency of the switch in accordance with the one or more detected parameter values in order to maintain the "time-on" property below a maximum threshold value. The clamping frequency adjuster may be configured to increase the clamping frequency for the switch if the "on-time" reaches or would be more than the maximum threshold value.

In this way, the clamping frequency can be increased, in some embodiments discretely, in order to reduce the clamping period. In some embodiments, increasing the clamping frequency back to the upper limit can enable operation of the power factor correction (PFC) circuit to return to DCM and/or CCM and/or BCM operation, or whatever mode of operation was in use before the controller adjusted the clamping frequency.

The clamping frequency adjuster may be configured to maintain the clamping frequency at an upper clamping frequency value if the on-time exceeds the maximum threshold value and the clamping frequency is at the upper clamping frequency value. The controller can prevent the clamping frequency from exceeding the upper clamping frequency value.

The controller may be configured to operate the power conversion circuit in boundary conduction mode with valley switching/skipping or fixed frequency discontinuous conduction mode when the clamping frequency is at an upper clamping frequency value.

The one or more operational parameter values may comprise one or more of the "time-on" property of the switch, a "time-off" property of the switch, a peak current value through the inductor or transistor/switch, an operational parameter of a DC to DC converter associated with the power conversion circuit, or any other property that can be used/processed to provide an indication of the efficiency of the power factor correction circuit. In some embodiments, the efficiency is improved by ensuring that the "time-on" property does not drop below a minimum threshold value.

For embodiments wherein the power conversion circuit comprises a PFC and a DC to DC converter, the one or more operational parameters may further comprise one or more operational parameters of the DC to DC converter, such as parameters derived from the controller of the DC to DC converter.

The clamping frequency adjuster may be configured to maintain the clamping frequency at a lower clamping frequency value if the time-on property of the switch is less than the minimum threshold value, and the clamping frequency is at the lower clamping frequency value. The clamping frequency adjuster may be configured to prevent the clamping frequency from dropping below a lower clamping frequency value, thereby allowing the time-on property of the switch to drop below the minimum threshold value when the clamping frequency is at the lower clamping frequency value. Such an example may reduce and/or avoid audible noise being generated from the circuit operating at too low a frequency. An example lower clamping frequency value/limit may be of the order of 15 - 25 kHz.

The power factor correction circuit may be a boost converter, a buck converter, a buck-boost converter or any other type of switching-mode power supply (SMPS) circuit. It will be appreciated that embodiments of the invention can be used with any pulse width modulation (PWM) controlled converter, particularly those that can operate in boundary conduction mode (BCM). Further examples include Cuk converters, single ended primary inductor (SEPIC) converters, flyback converters, forward converters and half bridge converters.

According to a further aspect of the invention, there is provided a power conversion circuit comprising:
a switch that is switchable at a switching frequency thereby defining a "time-on" property of the switch and being operable in accordance with a clamping frequency, in use; and
a controller for controlling the operation of the switch, the controller comprising:
   a detector configured to detect one or more operational parameter values of the power conversion circuit, in use; and
   a clamping frequency adjuster configured to adjust the clamping frequency for the switch in accordance with the one or more detected parameter values in order to maintain the "time-on" property above a minimum threshold value.

The power conversion circuit may be an integrated circuit (IC).

According to a further aspect of the invention, there is provided an electronic device comprising any power conversion circuit disclosed herein. The electronic device may be a computer, for example a desktop computer or a server, or may be consumer electronic equipment such as a television set or entertainment electronic equipment of any kind. Embodiments of the invention may also be suitable for PFC converters or power conversion circuits in dimmable ballasts.

Embodiments of the invention may be suitable for any application using low to mid power if there is an active power factor correction stage present. Embodiments of the invention may be especially of interest if the load and input voltage variation is wide.

According to a further aspect of the invention, there is provided a method of controlling the operation of a switch in a power conversion circuit, wherein the switch has a "time-on" property and a "clamping frequency" property in use, the method comprising:
detecting one or more operational parameter values of the power conversion circuit; and
adjusting the clamping frequency of the switch in accordance with the one or more detected parameter values in order to maintain the "time-on" property of the switch above a minimum threshold value.

According to a further aspect of the invention there is provided a computer program, which when run on a computer, causes the computer to perform any method disclosed herein or configure any apparatus, including a circuit or a controller, disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium such as a disc or a memory device, or may be embodied as a transient signal. Such a transient signal may be a network download, including an internet download.

The above summary is intended to be merely exemplary and non-limiting.

A description is now given, by way of example only, with reference to the accompanying drawings, in which:
Figure 1 illustrates a circuit according to an embodiment of the invention;
Figure 2 illustrates the results of use of a converter in a boundary conduction mode (BCM) and discontinuous conduction mode (DCM) of the prior art;
Figure 3 illustrates the results of use of a controller according to an embodiment of the invention; and
Figure 4 illustrates the results of use of a controller according to an embodiment of the invention.

One or more embodiments described herein can relate to a controller for a power conversion circuit, and in particular, a controller for controlling a switch in the power conversion circuit. The power conversion circuit may be a power factor correction circuit (PFC), with an optional DC to DC converter. The switch can be operable so that its switching frequency does not exceed a clamping frequency. The switching frequency defines a switching period/cycle and the clamping frequency defines a clamping period. The switch may be positioned in an "on" state for a "time-on" period of the switching period. In some embodiments, the controller can control the operation of the switch such that the switch is turned on when the voltage across the switch is at a minimum. Therefore, in some embodiments the controller can wait for the expiry of the clamping period before turning on the switch at the next instant in time when the voltage across the switch is at a minimum. This may be referred to as operation in boundary conduction mode with valley skipping.

Operation of the switch may be controllable, either directly or indirectly, in such a way that the "on-period" does not fall below a lower threshold limit and the clamping frequency can be adjusted in order to control this. In this way, power losses that can depend on the switching frequency can be reduced, and this can be particularly important for circuits having a relatively small load where power losses due to switching have a significant impact on efficiency. A more efficient power factor correction circuit can be provided according to one or more embodiments of the invention.

In some embodiments, an upper threshold limit value for the "on-period" of the switch may also be provided. In this way, the clamping frequency of the switch can be increased, either directly or indirectly, when the "on-period" exceeds the upper threshold limit, thereby decreasing the "on-period" required to provide a consistent average output power. In some embodiments, the clamping frequency may be increased stepwise up to a maximum/upper value, and any further increases in the "on-period" do not cause the clamping frequency to be increased.

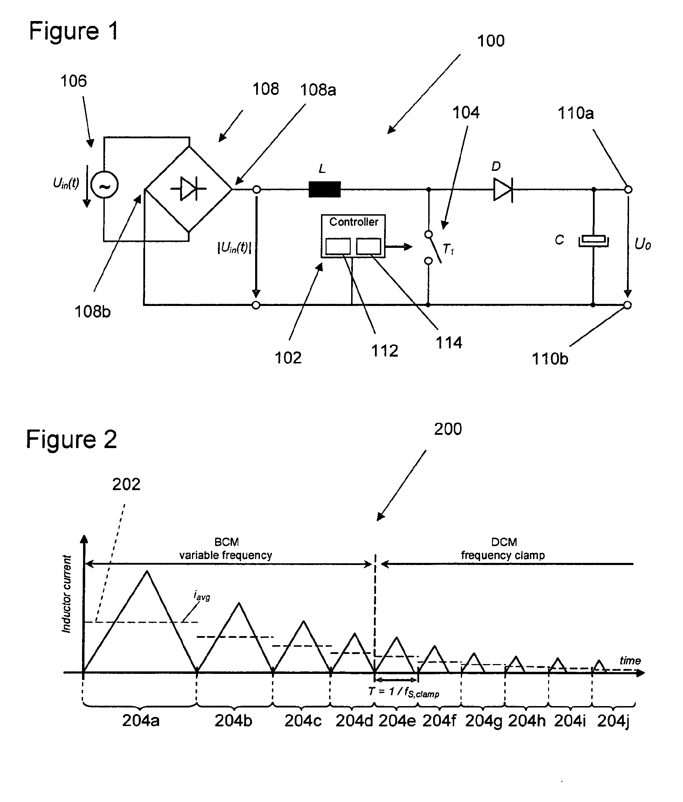

Figure 1 illustrates schematically a boost converter as part of an active power conversion circuit 100. In this embodiment, the power conversion circuit 100 comprises a power factor correction (PFC) circuit. In other embodiments, a DC to DC converter is coupled to the outputs of the PFC circuit, and the DC to DC converter may be a flyback converter that can provide galvanic isolation. Combinational controllers are known that include both a PFC and DC to DC converter, and such controllers can also be used with embodiments of the invention.

The circuit 100 of Figure 1 will initially be described in relation to use with a prior art controller 102 that is used to control the operation of the switch 104, and will also be described in relation to use of a controller 102 according to an embodiment of the invention.

According to embodiments of the invention, the controller 102 comprises a detector 112 and a clamping frequency adjuster 114. As will be appreciated from the description below, the detector 112 can be configured to detect one or more operational parameter values of the power factor correction circuit, and the clamping frequency adjuster 114 can be configured to adjust the clamping frequency of the switch 104 in accordance with the one or more detected parameter values.

The circuit 100 comprises an alternating input voltage source 106, such as a mains supply, that is connected to a bridge rectifier circuit 108. The DC voltage provided as an output of the bridge rectifier circuit 108 is illustrated in Figure 1 as |Uᵢₙ(t)|. A first DC voltage output 108a of the bridge rectifier circuit 108 is connected to a first pin of an inductor (L), and the second pin of the inductor (L) is connected to the first pin of a diode (D). The second pin of the diode (D) is connected to a first output port 110a and also a first plate of a capacitor (C).

A second DC voltage output 108b of the bridge rectifier circuit 108 is connected to a second plate of the capacitor (C) and also a second output port 110b.

In addition, a switch (T₁) is provided between the second DC voltage output 108b of the bridge rectifier 108 and the connection between the second pin of the inductor (L) and the first pin of the diode (D). As will be described in more detail, the state of the switch 104 (T₁) is controlled by the controller 102.

In order to comply with the requirements on the harmonic currents drawn from the single-phase line an active power factor correction (PFC) stage is used for already quite low (75W) to high power rates in many cases. The boost-converter shown in Figure 1 is the most commonly used topology as an active power factor corrector, and different control strategies for controlling the boost converter are known.

One known control strategy is the boundary conduction mode (BCM), where the inductor current starts from zero for every switching cycle, reaches twice the required average current, and then falls down to zero again to start the next switching cycle. The benefit of BCM is that the switch turns on just when the current in the diode reaches zero, and therefore switching losses in the switch, as well as reverse recovery losses in the diode, can be reduced or even avoided. In addition, drain-source voltage valley switching can be applied to further reduce the switching losses.

Boundary conduction mode (BCM) with valley skipping/switching is also known and may be considered as practical implementations of ideal BCM. Ideal BCM requires the current to drop to zero at the end of the switching cycle, however, in practice this does not occur as an oscillating inductor current will be present in the circuit as capacitors and other components, together with the boost inductor, provide an oscillating circuit. Boundary conduction mode (BCM) with valley switching comprises waiting for the diode current to fall to zero, and then further waiting for the next minimum (or at least a low enough) value in the oscillating voltage across the switch before operating the switch. The minimum value in the oscillating voltage may be referred to as a "valley". BCM with valley skipping involves skipping a number of "valleys" before operating the switch, so that the switch is operated upon the occurrence of a second or later valley.

One control method for BCM circuits in order to obtain sinusoidal input current is to apply a fixed on-time of the switch (104). It is known to persons skilled in the art that a fixed on-time will lead inherently to a high power factor and nearly sinusoidal line current. For this reason, the switching frequency will change within one line half wave, and on the other hand it depends on the input line voltage and the required output power. For this example, either or both of a higher input voltage (up to a certain limit) and a lower output power will cause an increase in the switching frequency.

A problem exists with known BCM control strategies in that an increase in the switching frequency also causes an increase in switching power losses because a switch is operated more often. As a consequence, high power losses in combination with a low power output can result in poor efficiency. This can be particularly disadvantageous where the power factor correction circuit is used in devices that need to fulfil certain efficiency requirements. For example, devices may be designed in order to satisfy an incentive programme for energy-efficient power supplies, such as the 80 plus programme that focuses on the efficiency of desktop computers and servers. In such examples, high efficiency is required even when a low output load is used, and satisfying the minimum efficiency requirements can be problematic with an increase in switching frequency for partial-loads using known BCM techniques.

A known solution to this problem is to apply a maximum switching frequency value, which is known as a clamping frequency F_{S,clamp}. In accordance with this solution, the switching frequency is increased (and therefore the switch on-time is reduced) as power levels decrease, until the switching frequency reaches a maximum threshold value. If the switching frequency reaches the maximum threshold, it is clamped/fixed at that value and the converter circuit switches to discontinuous conduction mode (DCM) operation. Another alternative is to change the mode of operation from BCM with valley switching to BCM with valley skipping, and these two modes of operation are described above. In accordance with this technique, a new switching cycle does not begin until expiry of the clamping period (corresponding to the clamping frequency).

Figure 2 shows graphically a variation in inductor current for several switching cycles during a decrease in the required power level, and how this affects the on-time (and hence switching frequency) for a switch in a PFC circuit. It will be appreciated that the inductor current increases when the switch is on, and decreases towards zero when the switch is off.

In order to simplify the explanation, a constant input voltage is assumed, which would normally only be the case for DC-DC operation. In other embodiments, it will be appreciated that the average inductor current could be controlled in order to provide sinusoidal waveforms for power factor correction implementations.

The graph of Figure 2 illustrates the inductor current on the vertical axis, and the average inductor current for each switching period is illustrated as dashed lines 202 and is labelled i_{avg}. It will be appreciated that the average inductor current 202 is proportional to the output power. The horizontal axis of the graph 200 illustrated in Figure 2 relates to time.

The first four periods 204a, 204b, 204c, 204d shown on the graph 200 are controlled by variable frequency BCM. That is, as the required power level decreases over time the switch on-time is decreased and therefore the switching frequency increases. As can be seen in Figure 2, the inductor current rises to its maximum value, and then returns to zero over shorter periods of time as the required power level decreases.

BCM operation continues up until the end of the fourth period 204d, whereby a continued increase in the switching frequency would exceed the clamping frequency F_{S,clamp}. Therefore, as the required output power decreases further after the fourth period 204d, the converter circuit automatically switches from BCM variable frequency operation to DCM operation with a fixed clamping frequency. That is, the switch cannot be operated again before the expiry of a clamping period corresponding to the clamping frequency.

As can be seen from Figure 2, each of the periods 204e-j for the DCM mode of operation are fixed at a minimum value that corresponds to the clamping frequency. As the required output power reduces further, the inductor current rises to its maximum value and returns to zero before the expiry of the minimum clamping period. In this way, periods of time occur at which the diode and switch current are zero.

It can be seen from Figure 2 that for part load and short switching cycles, the inductor current only accounts for a short period of time of the total period, whereas some of the common power losses such as driver losses and capacitive losses caused by switching (for example switching of a MOSFET switch) still exist in every period. This can result in relatively high power losses because of the high switching frequency.

It will be appreciated that control of the switch can change back from DCM fixed frequency operation to BCM operation with valley switching when the switching frequency required to provide the desired power output in BCM operation is lower than the clamping frequency value.

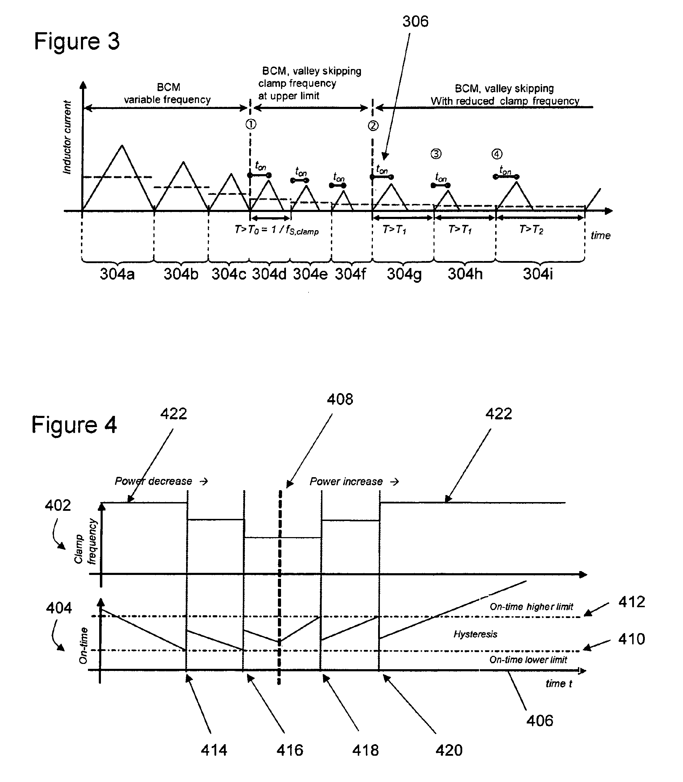

Figure 3 illustrates graphically the use of a controller according to an embodiment of the invention. In this embodiment, a clamping frequency is used in a similar way to the prior art example discussed in relation to Figure 2, and is further modified such that the clamping frequency value can be adjusted in accordance with a time period that the switch of the power factor correction circuit is on. In other embodiments the clamping frequency value may be adjusted in accordance with the switch off-time, the peak current through the inductor or transistor/switch, an operational parameter of a DC to DC converter associated with the PFC, or any other characteristic/property of any component or signal in the circuit. It will be appreciated that the clamping frequency value, and hence the switch "time-on" property can be adjusted directly or indirectly, and this is described in more detail below.

The first three periods 304a, 304b, 304c illustrated in Figure 3 are controlled by BCM variable frequency operation in the same way as the first four periods 204a, 204b, 204c, 204d illustrated in Figure 2. The fourth period 304d illustrated in Figure 3 would cause the switching frequency to exceed the maximum clamping frequency value (F_{S,clamp}), and therefore the period 304d is forced by the corresponding clamping frequency to switch on at a higher numbered valley in order for the resulting actual switching period to be larger than the minimum clamp period defined by the clamping frequency. The same is true for the fifth and sixth periods 304e-f. Periods 304d-f relate to BCM with valley skipping wherein the clamping frequency is at its upper limit/maximum value. In addition, the period of time that the switch is on is illustrated graphically in Figure 3 with reference 306. It will be appreciated that the inductor current rises when the switch is on, and falls, or remains at zero, when the switch is off as the inductor is demagnetised.

According to this embodiment of the invention, the controller is provided with a detector that monitors the value for the "time-on" parameter of the switch, which is an absolute value of time that the switch is in the on state. The controller is configured to adjust the clamping frequency in accordance with the detected values as will now be discussed. In this example the clamping frequency is set at a discrete fixed value by the controller in order for the "time-on" parameter of the switch to be within a predefined range of values, and this can enable an efficient PFC to be provided. In other embodiments, the clamping frequency can be adjusted continuously in order to satisfy design requirements.

In this example, when the "time-on" period of the switch falls below a predetermined lower threshold limit, the controller reduces the clamping frequency value, thereby increasing the clamping period. In this way, the "time-on" period increases within the larger clamping period in order to maintain the same average output power. As shown in Figure 3, the seventh period 304g, compared with the sixth period 304f, represents a longer period of time such that the "time-on" period is accordingly increased to exceed the predetermined lower threshold limit for the "time-on" parameter. As illustrated in Figure 3, the sixth period 304f has a "time-on" period that is approaching the lower threshold limit, and as the required output power decreases further for the seventh period 304g, the controller automatically reduces the clamping frequency in order to increase the "time-on" period such that it now exceeds the minimum threshold value.

As illustrated in Figure 3, the "time-on" period for the eighth period 304h is again approaching the lower threshold limit, and therefore the clamping period is further increased between the eighth period 304h and the ninth period 304i such that the "time-on" period does not fall below the lower threshold limit.

Figure 4 illustrates graphically, in a different way, use of the same controller that is used to generate the graphical results illustrates as Figure 3. Figure 4 illustrates the change in clamping frequency 402 on the top graph and the "on period" of the switch 404 on the bottom graph. Both the top and bottom graphs are in relation to the same horizontal time axis 406.

As time passes from left to right for the graphs illustrated in Figure 4, the power passing through the circuit gradually decreases up until vertical horizontal line 408, after which the required output power increases. As will be described, the clamping frequency value is decreased in a stepwise fashion as the "time-on" period decreases and reaches a lower threshold limit 410 as the power decreases. Similarly the clamping frequency 402 increases in a stepwise fashion as the "on-period" 404 reaches an upper threshold limit 412 as the required output power increases. In this way, the fixed clamping frequency 402 is adjusted so that the "time-on" period 404 is within a range of values defined by upper and lower threshold limits 410, 412.

As illustrated in Figure 4, and starting at the leftmost (earliest in time) portion of the graph, the clamping frequency is initially set at the upper clamping frequency 422, and the value for the "on-period" 404 of the switch is set so as to provide a required power output. The value for the clamping frequency is shown on the top graph 402, and the "on-time" of the switch is shown on the bottom graph 404.

As the power decreases over time, the clamping frequency 402 remains constant, and the "on-period" 404 is reduced. The "on-time" 404 is reduced until it reaches a lower threshold limit 410, which is predefined, and is indicative of a value at which the switching losses become dominant, particularly in the case of light load operation. The lower threshold limit 410 is selected as a value whereupon a shift towards lower clamping frequencies will cause an improvement in the overall efficiency of the power factor correction circuit.

When the "on-time" value 404 reaches the lower threshold limit 410 at time 414, the clamping frequency 402 is reduced by a discrete amount (for example in a stepwise fashion) in order to increase the absolute "on-time" value 404 for the new clamping frequency value. This processing is repeated at time value 416 whereupon the value for the "on-period" again reaches the lower threshold limit 410. It will be appreciated that decreasing the switching frequency corresponding to the clamp level causes the controller to correspondingly increase the switch on-time in order to provide the required output power.

As time passes, the power required by the circuit begins to increase after the time represented by the vertical dashed line 408 illustrated in Figure 4. As the power increases, the "on-period" 404 correspondingly increases in order to provide the required output power until it reaches an upper threshold limit 412 at time 418.

In order to decrease the absolute value of the "on-period" 404 the clamping frequency 402 is discretely increased (for example in a stepwise fashion), and this processing is again repeated at time 420.

It will be appreciated that by providing a lower threshold limit 410 and an upper threshold limit 412, hysteresis is provided as the clamping frequency 402 is increased and decreased in accordance with changes in the "on-period" 404. This can suppress subharmonic oscillations, reduce the chances of the clamping frequency being adjusted unnecessarily and too frequently, and can improve the overall efficiency of the circuit.

Hysteresis can be implemented to avoid oscillations, and to avoid an immediate return to the former clamping period. Principally, the converter can switch the clamping frequency level cycle by cycle, and this can mean that in some examples the clamping frequency level changes within a 50Hz mains period. The controller may only allow for very slow changes of the "on-time" of the switch in relation to the frequency of the mains supply.

In other embodiments, the clamping frequency can be continuously adjusted to satisfy one or more design requirements. For example a design requirement may be to fix the on-time of the switch at a specific value or between a range of values.

In this example the clamping frequency 402 has an absolute maximum value, whereupon further increases in the "on-period" 404 do not cause the clamping frequency 402 to be further increased beyond the maximum value. This can be advantageous as operation of the circuit can switch to DCM or BCM, which may be more efficient and/or economical for operation at certain power values.

Example values for the maximum clamping frequency are 125 kHz (or as close as realisable to 150 kHz) and 65 kHz (or as close as possible to 75 kHz). As known in the art, a frequency of 150kHz can be considered as the boundary for starting the conducted electromagnetic interference requirements for mains signals. There may be no regulations for frequencies less than 150 KHz. Therefore, by staying below, but close to, a maximum clamping frequency of 150kHz, the disturbance caused by the fundamental frequency does not need to be filtered out. In examples where a maximum clamping frequency of 75kHz is used, the fundamental frequency and the first harmonic do not need to filtered out. It will be appreciated that other maximum clamping frequencies can be used in accordance with the same principle. The values for the minimum and maximum threshold values for the "time-on" parameter can depend upon the power that is to be transferred and other design criteria.

In some embodiments, a lower clamping frequency value may be provided to avoid and/or reduce audible noise. An example lower clamping frequency limit may be around 15 - 25 kHz. In such examples, the on-time may be allowed to drop below the lower on-time threshold 410 as it takes precedence over a further reduction in the clamping frequency.

In some embodiments, the clamping frequency adjuster could also be used to change the mode of operation to fixed frequency DCM once the upper clamp frequency has been reached. In this case the switching frequency may be fixed equal to the upper or adjusted clamp frequency.

Any operational parameter value of a power factor correction (PFC) circuit may be used to control operation of the switch. These can include one or more of the "time-on" property of the switch, a "time-off" property of the switch, a peak or average current flowing through the inductor or the switch, or any other property that can be used/processed to provide an indication of the efficiency of the power factor correction circuit.

The time-on property of the switch can be indirectly controlled in embodiments where the peak current through the inductor or transistor switch is controlled. It will be appreciated that controlling the peak current (Ipₑₐₖ) also causes time-on property of the switch to be adjusted, and therefore embodiments that utilise peak current control can also be used to maintain the time-on property of the switch above a minimum threshold value. The real peak of the switch current within a half period of the mains cycle can be monitored in such examples, as is known in the art. Such a control method is implemented in a variety of integrated circuits from different manufacturers, for example the L656x series of integrated circuits, which do not operate with any clamping frequency.

In such examples, the on-time is under steady state operation, and the peak current is modulated with the input voltage. The corresponding constant value in this control method is the output signal of the output voltage controller which delivers a multiplicand determining the peak current. The sinusoidal variation of the peak current is obtained by the other multiplicand - the input voltage. Therefore, it will be appreciated that embodiments described herein can be adapted to use the output signal of the output voltage controller instead of, or as well as, the on-time to control operation of the circuit.

In further examples still, the output current or the output power can be controlled in order to indirectly adjust the on-time of the switch. This may be particularly beneficial for power conversion circuits that have a PFC and a subsequent DC to DC converter. In such examples, the one or more operational parameter values that are used to adjust the clamping frequency can include information derived from the PFC or the controller of the DC to DC converter.

For example, where a flyback converter is used in BCM or DCM operation as the DC to DC converter, the on-time is a direct measure of the transferred power. Such a DC to DC converter may be considered as a second stage that receives a constant input voltage from a first stage which can be a boost PFC stage. Again a measure for the on-time can be derived from the output voltage controller.

In some embodiments, efficiency can be improved by ensuring that the "time-on" property of the switch does not drop below a minimum threshold value.

Further embodiments of the invention can use any dependency f_{T}(tₒₙ) to control operation of the switch. In one example, it is possible to apply a simple linear dependency, and in other examples it is possible to realise special functions and algorithms of the time-on property in order to control operation of the switch. For example, a further dependency on the input voltage. As discussed above, operation of the switch does not necessarily have to be controlled in accordance with detection of the time-on property, and other properties may be used.

It will be appreciated that advantages of methods described herein include an automatic adjustment of the clamping period and therefore an adjustment of the clamping frequency in order to reduce the power losses that depend on the switching/clamping frequency in order to achieve higher efficiency, even for part load. In some examples, the reduction of the clamping frequency level can be performed stepwise in dependency of the on-time of the switch tₒₙ. In some embodiments hysteresis can be applied to the control of the clamping frequency by introducing an on-time higher limit (412) in order to suppress subharmonic oscillations.

Embodiments of the invention can be used for applications in low to mid power where an active power factor correction stage is used. Embodiments of the invention can be especially of interest if the load and input voltage variation is wide. In some examples, the invention can be especially suited for personal computer (PC) power supplies, consumer electronic equipment such as television sets or entertainment electronics of any kind. Other examples may also be suitable for PFC converters in dimmable ballasts.

One or more embodiments of the invention can include a PFC circuit with a "frequency clamp adjuster", wherein the "time-on" property of the switch can be maintained above a minimum threshold value either directly or indirectly using one or more of:
- A "constant on-time" control strategy.
- A "peak current" control strategy.
- A method to decrease the value of the clamping frequency for light load in a way that conversion with higher efficiency occurs at the same average input current over one switching cycle. This method can still allow for BCM operation with valley detection and skipping.
- A method to reduce the clamping frequency level depending on the result of a detection mechanism of low output power which can represent operation at part load.
- A detection mechanism can be based on the active on-time of the switch.
- A detection mechanism can be based on the peak current (MOSFET, diode, inductor or even capacitor).
- A detection mechanism can be based on the average current (MOSFET, diode and inductor)
- A detection mechanism can be based on the off-time of the switching in conjunction with the input or/and output voltage value or an internally generated estimation of these values.
- A detection mechanism can be based on the output power.
- A detection mechanism can be based on operational parameters of a DC to DC converter associated with the output of a PFC.
- Hysteresis to prevent the system from subharmonic oscillations.
- Most of the above mentioned features can also be applied if the converter does not operate at BCM plus valley switching but in standard DCM mode.
- Most of the above features can also be used for PFC pre-regulators as well as for DC-DC converters.

## Claims

1. A power conversion controller (102) for controlling the operation of a switch (104) in a power conversion circuit (100), wherein the switch (104) has a "time-on" property and a "clamping frequency" property, in use, the power conversion controller (102) comprising:
a detector (112) configured to detect one or more operational parameter values of the power conversion circuit (100); and
a clamping frequency adjuster (114) configured to adjust the clamping frequency of the switch (104) in accordance with the one or more detected parameter values in order to maintain the "time-on" property of the switch above a minimum threshold value.

2. The power conversion controller (102) of claim 1, wherein the clamping frequency adjuster (114) is configured to adjust the clamping frequency in a stepwise fashion.

3. The power factor conversion controller (102) of claim 1, wherein the clamping frequency adjuster (114) is configured to adjust the clamping frequency continuously.

4. The power conversion controller (102) of claim 1 or claim 2, wherein the clamping frequency adjuster (114) is configured to decrease the clamping frequency of the switch (104) if the "on-time" reaches or is less than the minimum threshold value.

5. The power conversion controller (102) of any preceding claim, wherein the clamping frequency adjuster (114) is configured to adjust the clamping frequency of the switch (104) in accordance with the one or more detected parameter values in order to maintain the "time-on" property below a maximum threshold value.

6. The power conversion controller (102) of claim 5, wherein the clamping frequency adjuster (114) is configured to increase the clamping frequency of the switch (104) if the "on-time" reaches or is more than the maximum threshold value.

7. The power conversion controller (102) of claim 5 or claim 6, wherein the clamping frequency adjuster (114) is configured to maintain the clamping frequency at an upper clamping frequency value if the on-time exceeds the maximum threshold value and the clamping frequency is at the upper clamping frequency value.

8. The power conversion controller (102) of claim 7, wherein the controller (102) is configured to operate the power factor correction circuit (100) in boundary conduction mode with valley skipping or fixed frequency discontinuous conduction mode when the clamping frequency is at the upper clamping frequency value.

9. The power conversion controller (102) of any preceding claim, wherein the clamping frequency adjuster (114) is configured to maintain the clamping frequency at a lower clamping frequency value if the time-on property of the switch is less than the minimum threshold value and the clamping frequency is at the lower clamping frequency value.

10. The power conversion controller (102) of any preceding claim, wherein the one or more operational parameters comprise one or more of:
the time-on property of the switch;
a time-off property of the switch;
a peak current value through the switch;
a peak current value through an inductor of the power conversion circuit; and
an operational parameter of a DC to DC converter associated with the power conversion circuit.

11. A power conversion circuit (100) comprising:
a switch (104) that is switchable at a switching frequency thereby defining a "time-on" property of the switch and being operable in accordance with a clamping frequency, in use; and
a controller (102) for controlling the operation of the switch (104), the controller (102) comprising:
a detector (112) configured to detect one or more operational parameter values of the power conversion circuit (100), in use; and
a clamping frequency adjuster (114) configured to adjust the clamping frequency for the switch (104) in accordance with the one or more detected parameter values in order to maintain the "time-on" property above a minimum threshold value.

12. The power conversion circuit of claim 11, wherein the power conversion circuit (100) comprises a power factor correction circuit.

13. The power conversion circuit of claim 12, wherein the power conversion circuit (100) further comprises a DC to DC converter connected to the outputs of the power factor correction circuit.

14. A method of controlling the operation of a switch (104) in a power conversion circuit (100), wherein the switch (104) has a "time-on" property and a "clamping frequency" property in use, the method comprising:
detecting one or more operational parameter values of the power conversion circuit (100); and
adjusting the clamping frequency of the switch (104) in accordance with the one or more detected parameter values in order to maintain the "time-on" property of the switch (104) above a minimum threshold value.

15. A computer program, which when run on a computer, causes the computer to perform the method of claim 14, or configure the controller (102) of any one of claims 1 to 10, or configure the circuit (100) of any one of claims 11 to 13.

## Amended claims

### Amended claims in accordance with Rule 137(2) EPC.

**1.** A power conversion controller (102) for controlling the operation of a switch (104) in a power conversion circuit (100), wherein the switch (104) has a "time-on" property and a "clamping frequency" property, in use, the power conversion controller (102) comprising:
a detector (112) configured to detect one or more operational parameter values of the power conversion circuit (100); and
a clamping frequency adjuster (114) configured to adjust the clamping frequency of the switch (104) in accordance with the one or more detected parameter values in order to maintain the "time-on" property of the switch above a minimum threshold value.

**2.** The power conversion controller (102) of claim 1, wherein the clamping frequency adjuster (114) is configured to adjust the clamping frequency in a stepwise fashion.

**3.** The power conversion controller (102) of claim 1 or claim 2, wherein the clamping frequency adjuster (114) is configured to operate the switch (104) with the clamping frequency fixed at a constant value while the "time-on" property is between first and second threshold values.

**4.** The power conversion controller (102) of claim 1 or claim 2, wherein the clamping frequency adjuster (114) is configured to decrease the clamping frequency of the switch (104) if the "on-time" reaches or is less than the minimum threshold value.

**5.** The power conversion controller (102) of any preceding claim, wherein the clamping frequency adjuster (114) is configured to adjust the clamping frequency of the switch (104) in accordance with the one or more detected parameter values in order to maintain the "time-on" property below a maximum threshold value.

**6.** The power conversion controller (102) of claim 5, wherein the clamping frequency adjuster (114) is configured to increase the clamping frequency of the switch (104) if the "on-time" reaches or is more than the maximum threshold value.

**7.** The power conversion controller (102) of claim 5 or claim 6, wherein the clamping frequency adjuster (114) is configured to maintain the clamping frequency at an upper clamping frequency value if the on-time exceeds the maximum threshold value and the clamping frequency is at the upper clamping frequency value.

**8.** The power conversion controller (102) of claim 7, wherein the controller (102) is configured to operate the switch (104) in boundary conduction mode with valley skipping or fixed frequency discontinuous conduction mode when the clamping frequency is at the upper clamping frequency value.

**9.** The power conversion controller (102) of any preceding claim, wherein the clamping frequency adjuster (114) is configured to maintain the clamping frequency at a lower clamping frequency value if the time-on property of the switch is less than the minimum threshold value and the clamping frequency is at the lower clamping frequency value.

**10.** The power conversion controller (102) of any preceding claim, wherein the one or more operational parameters comprise one or more of:
the time-on property of the switch;
a time-off property of the switch;
a peak current value through the switch;
a peak current value through an inductor of the power conversion circuit; and
an operational parameter of a DC to DC converter associated with the power conversion circuit.

**11.** A power conversion circuit (100) comprising:
a switch (104) that is switchable at a switching frequency thereby defining a "time-on" property of the switch and being operable in accordance with a clamping frequency, in use; and
a controller (102) for controlling the operation of the switch (104), the controller (102) comprising:
a detector (112) configured to detect one or more operational parameter values of the power conversion circuit (100), in use; and
a clamping frequency adjuster (114) configured to adjust the clamping frequency for the switch (104) in accordance with the one or more detected parameter values in order to maintain the "time-on" property above a minimum threshold value.

**12.** The power conversion circuit of claim 11, wherein the power conversion circuit (100) comprises a power factor correction circuit.

**13.** The power conversion circuit of claim 12, wherein the power conversion circuit (100) further comprises a DC to DC converter connected to the outputs of the power factor correction circuit.

**14.** A method of controlling the operation of a switch (104) in a power conversion circuit (100), wherein the switch (104) has a "time-on" property and a "clamping frequency" property in use, the method comprising:
detecting one or more operational parameter values of the power conversion circuit (100); and
adjusting the clamping frequency of the switch (104) in accordance with the one or more detected parameter values in order to maintain the "time-on" property of the switch (104) above a minimum threshold value.

**15.** A computer program, which when run on a computer, causes the computer to perform the method of claim 14, or configure the controller (102) of any one of claims 1 to 10, or configure the circuit (100) of any one of claims 11 to 13.
